Europäisches Patentamt

European Patent Office

Office européen des brevets

(19)

(11) Publication number: **0 141 667**
A2

(12) # EUROPEAN PATENT APPLICATION

(21) Application number: **84307613.4**

(22) Date of filing: **05.11.84**

(51) Int. Cl.⁴: **B 29 C 65/02**

(30) Priority: **08.11.83 GB 8329802**

(43) Date of publication of application: **15.05.85**
Bulletin 85/20

(84) Designated Contracting States: **AT BE CH DE FR GB IT LI LU NL SE**

(71) Applicant: **SHIRLEY INSTITUTE, Wilmslow Road, Didsbury Manchester M20 8RX (GB)**

(72) Inventor: **Floyd, Kenneth, The Shirley Institute Wilmslow Road, Didsbury Manchester M20 8RX (GB)**

(74) Representative: **McNeight, David Leslie, McNeight & Lawrence Regent House Heaton Lane, Stockport Cheshire SK4 1BS (GB)**

(54) Methods and apparatus for joining superimposed laminar workpieces.

(57) Superimposed laminar workpieces are joined along a desired seam line by passing them together between anvil means such as a roller (which may be plain surfaced or engraved as with a pattern of lines or dots) extending transversely to the direction of travel of the workpieces relative thereto, and at least one workhead traversable across said anvil means selectively to heat said workpieces along said desired seam line to heat join them together.

EP 0 141 667 A2

0141667

## METHODS AND APPARATUS FOR JOINING

## SUPERIMPOSED LAMINAR WORKPIECES

This invention relates to methods and apparatus for joining superimposed laminar workpieces.

According to the invention there is provided a method for heat joining superimposed laminar workpieces along a desired seam line comprising passing the workpieces between anvil means extending transversely to the direction of travel of the workpieces relative thereto and at least one workhead traversable across said anvil means selectively to heat said workpieces along said desired seam line to join them together.

The invention also includes apparatus for performing the method aforesaid.

Each workpiece may comprise a layer of a sheet material such as a fusible film or a woven, knitted or non-woven fabric incorporating at least some thermoplastic polymer.

The workhead may be comprised by an ultrasonic probe, a high speed rotatable friction welding wheel or burr or other device capable of generating heat to cause melting of the film or thermoplastic polymer and hence a welding together of the layers.

The workhead may be movable towards and away from the anvil whereby the welded joint may be discontinuous, to simulate stitching for example, or for other purposes. This may be done by the workhead comprising a milled or patterned edge. Such a workhead may be powered ultrasonically or it may operate to heat the work pieces by conducting.

These methods for joining along with other and known methods for cutting can be used for example in the production of garments and other shaped articles from a wholly fusible material such as plastics film or from woven or knitted or non-woven materials incorporating at least some thermoplastic polymers. The plies of the film or other material are passed through a workstation to join and cut the plies along desired lines. Two workheads may be arranged - for example on a rotary lead screw shaft of which the two halves have opposite hands of thread - traversable mirror-image fashion so as to describe seam lines appropriate to right and lefthand sides of a garment.

The invention will be further apparent from the following description, with reference to the figures of the accompanying drawings, which show, by way of example only, one form of apparatus embodying the invention and for practising the method thereof.

Of the drawings:-

Figure 1    shows a plan view of one embodiment of apparatus;

Figure 2    shows a cross-section of the apparatus on the line II-II of Figure 1.

and    Figure 3    shows a part-sectional elevation of a second embodiment of apparatus.

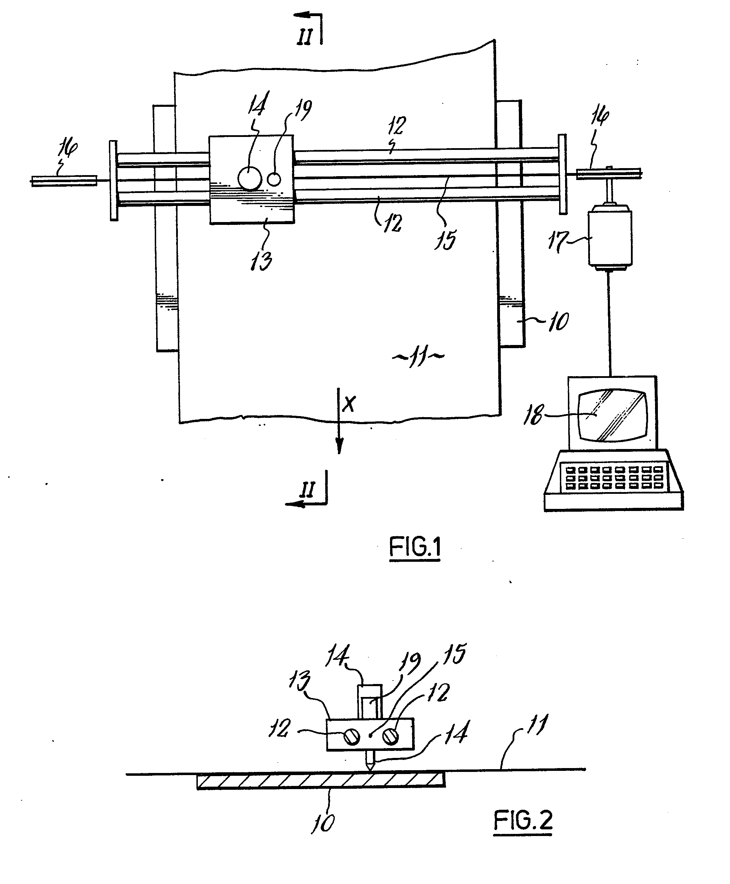

Referring now to Figures 1 and 2 of the drawings, it will be seen that the apparatus comprises an anvil 10 over which two superimposed layers 11 of a non-woven textile fabric incorporating thermoplastic fibre is passed in the direction of the arrow X. Guide bars 12 extend transversely above the anvil 10 to support a carriage 13 which mounts a workhead 14 whose lower extremity bears against the layers 11 to press them against the anvil 10. The carriage 13 and hence workhead 14 may be traversed over the layers 11 by means of cables 15 passing over pulleys 16, one of which is driven by a motor 17 to position the workhead 14 in accordance with a programme generated by or resident in a microprocessor 18.

The workhead 14 which may be an ultrasonic probe which operates to weld the two layers 11 together to form a seam along its line to contact with the layers as they are advanced beneath the workhead 14.

Further devices may be arranged to traverse the layers 11, such as a laser beam generator for example, to cut them along desired lines. In this way all manner of articles such as disposable garments can be fabricated at high speed and with minimal labour.

If desired solenoid means 19 maybe provided to enable the workhead 14 to be retracted whereby the welded seam produced, can be discontinous.

In a variation, the workhead takes the form of a small wheel or burr of suitable material such as ceramic or felt, rotating at a high speed in the range of from say 30,000 to 40,000 rpm, whereby the seam can be produced by friction welding.

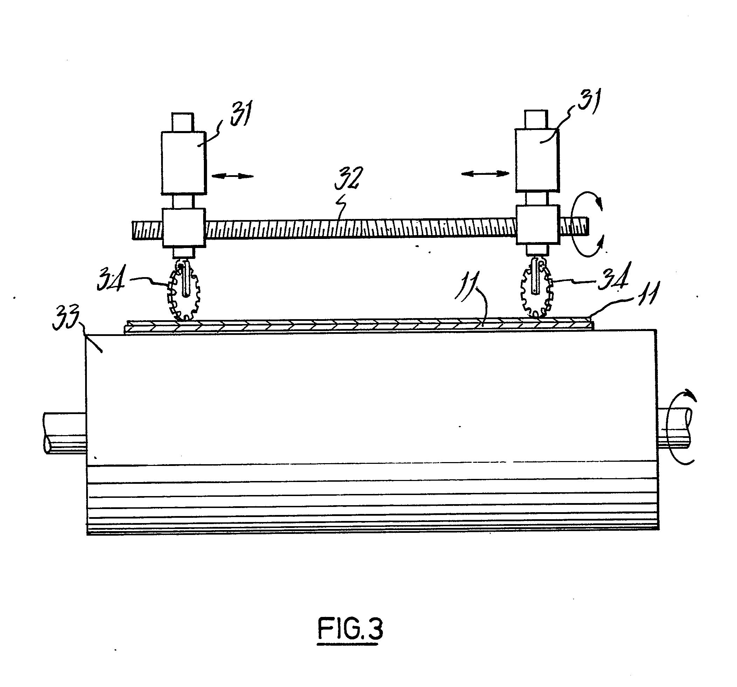

In the embodiment illustrated in Figure 3, two workheads 31 are provided each responsible for opposite sides of a garment for example, one automatically yielding the mirror image of the other at a desired spacing therefrom, since they are mounted on opposite sides of a rotary lead screw shaft 32; which have like threads but of opposite hand, so that the workheads 31 describe seam lines appropriate to left and right hand side of a garment. The mirror-image traversing movement of the workheads is brought about simply by rotation of the shaft 32. If independent movement of the workheads 31 is required, the shaft may have a uniform thread and each workhead include a stepper motor controlled from a microcomputer.

The workheads 31 have notched wheels 34 that are held castor-fashion so as to be free to move by rotation on the surface in any direction of the seam line, the notches effectively moving the active part of the workhead towards and away from the workpiece so as to make a discontinuous seam, after the fashion, say, of machine stitching. The workhead can be activated by ultrasonics, although care must be taken to ensure that the wheels can still execute their castor action despite the presence of high frequency vibrations. Instead of a castor action, the wheels can be driven directionally as by another stepper motor on each workhead. This may dispense with or reinforce any lead screw traversing action.

A pattern or profile can also be a seam by patterning or engraving the anvil roller 33. Simple axially extending ridges and grooves can be used and will be suitable for most purposes where the seams are essentially lengthwise of the travelling laminar workpieces, but a rectangular or diamond array of closely spaced dots may be more effective for many other applications.

0141667

## CLAIMS

1.      A method for heat joining superimposed laminar workpieces along a desired seam line comprising passing the workpieces together between anvil means extending transversely to the direction of travel of the workpieces relative thereto and at least one workhead traversable across said anvil means selectively to heat said workpieces along said desired seam line to heat join them together.

2.      A method according to claim 1, in which said workhead heats said workpieces by ultrasonics.

3.      A method according claim 1, in which said workhead heats said workpieces by conduction.

4.      A method according to claim 1, in which said workhead heats said workpieces by generating heat frictionally.

5.      A method according to any of claims 1 to 4, in which the workhead is movable towards and away from the anvil means whereby the heat joint may be discontinuous along the seam line.

6.      A method according to claim 5, in which the workehad comprises a rotary wheel having a milled or patterned edge.

7.      A method according to any one of claims 1 to 6, in which there are two workheads traversable in mirror-image fashion so as to describe seam lines appropriate to left and right hand sides of a garment.

8.      A method according any one of claims 1 to 7, in which the anvil means comprise roller means forwarding the workpieces.

9.      A method according to claim 8, in which said roller means comprise a patterned or engraved surface whereby the heat joint may be made discontinuous to simulate stitching or other special effect.

10.      Apparatus for heat joining superimposed laminar workpieces along a desired seam line comprising anvil means and at least one workhead between which and said anvil means the workpieces can be passed together and said anvil means extending transversely to the direction of travel of the workpieces relative thereto said workhead being traversable across said anvil means selectively to heat said workpieces along the desired seam line to heat join them together.

0141667

FIG.1

FIG.2

FIG.3